Europäisches Patentamt

European Patent Office

Office européen des brevets

(11) Publication number: **0 406 775 A2**

# EUROPEAN PATENT APPLICATION

(21) Application number: 90112612.8

(51) Int. Cl.⁵: **B24B 5/02**

(22) Date of filing: 02.07.90

(30) Priority: 07.07.89 IT 6756489

(43) Date of publication of application:
09.01.91 Bulletin 91/02

(84) Designated Contracting States:
CH DE ES FR GB IT LI

(71) Applicant: TACCHELLA MACCHINE S.p.A.
Via Cesare Battisti, 9
I-15011 Acqui Terme(IT)

(72) Inventor: Tacchella, Elio
Via Cesare Battisti 9
I-15011 Acqui Terme(IT)

(74) Representative: Jorio, Paolo et al
STUDIO TORTA Società Semplice Via Viotti 9
I-10121 Torino(IT)

(54) Grinding machine.

(57) A grinding machine (1) featuring a worktable (5) and a wheel table (12), and wherein a grinding wheel (28) is mounted on the wheel table (12) so as to move, in relation to the same, to and from the worktable (5) along a·transverse axis (23); the worktable (5) and the wheel table (12) traveling along respective longitudinal axes (7)(15), of which the first (7) is fixed and the second (15) adjustable in relation to the first (7).

EP 0 406 775 A2

## GRINDING MACHINE

The present invention relates to a grinding machine. Solids of rotation, particularly shafts of any external shape, are known to be ground on machines comprising a worktable, usually horizontal, having a headstock and tailstock for supporting and rotating the work about its longitudinal axis. The worktable is usually designed to travel along a longitudinal axis, for which purpose it is mounted on slideways arranged parallel to the longitudinal axis of the work and on which it travels past a grinding wheel usually supported on a saddle moving to and from the worktable along a transverse axis usually perpendicular to the traveling direction of the worktable.

On known grinding machines of the aforementioned type, cylindrical surfaces are nearly always ground by setting the outer surface of the wheel parallel to the cylindrical surface of the work, and by moving the worktable along the longitudinal axis and the saddle along the transverse axis, which extends perpendicular to the longitudinal axis when using cylindrical wheels.

On known grinding machines of the aforementioned type, conical surfaces have nearly always been ground differently, depending on whether or not the machine is numerically controlled.

On non-numerical-control machines, the worktable usually consists of a platform mounted on said longitudinal slideways and designed to turn in relation to the same about a normally vertical axis, at any rate perpendicular to the plane defined by the longitudinal and transverse traveling directions of the worktable and saddle respectively.

On machines of this sort, conical surfaces are usually ground by rotating the worktable so that the generating line of the conical surface facing the wheel is parallel to the outer surface of the wheel, and by moving the worktable so positioned along the longitudinal slideways, thus enabling the wheel to explore said generating line and grind the conical surface in the same way as a cylindrical surface.

The above method, whereby the worktable is rotated in relation to the longitudinal slideways, involves a number of drawbacks, particularly when the outer surface of the work comprises both cylindrical and conical surfaces. As both the cylindrical and conical surfaces are ground in one pass, to ensure both are maintained coaxial, the worktable is first maintained parallel to the longitudinal slideways and the outer surface of the wheel as this explores the generating line of each cylindrical surface, and is then positioned as already described in relation to the longitudinal slideways, i.e. rotated about a vertical axis, at the start of each conical surface pass.

Unfortunately, return of the worktable to its original position, parallel to the longitudinal slideways, is not always as accurate as it should be, mainly on account of impurities preventing correct rotation of the worktable in relation to the slideways. This therefore results in geometrical (concentricity) errors on the work, which cannot be avoided by truing the wheel each time the worktable returns to its original position, and which can only be avoided partially by means of manual action on the part of the operator.

On numerical control machines, the wheel was usually mounted on the saddle via the interposition of a platform turning about a normally vertical axis, at any rate perpendicular to the plane defined by the traveling direction of the worktable and saddle. In this case, conical surfaces were usually ground by rotating the platform in such a manner as to set the outer surface of the wheel parallel to the generating line of the conical work surface facing the wheel, and by simultaneously moving the work and wheel, via interpolation of the respective longitudinal and transverse traveling directions of the worktable and saddle, so as to enable the wheel to explore the generating line of the work facing it.

Such a method usually resulted in more or less stepped conical surfaces, generally unacceptable in cases requiring a relatively accurate, good quality surface finish.

The above drawbacks have resulted in the rotary worktable solution, typical of non-numerical-control machines, also being adopted on numerical control types, such a throwback obviously resulting in reduced output efficiency and repeatability.

The aim of the present invention is to provide a grinding machine, controlled numerically or otherwise, designed to overcome the above drawbacks, i.e. enabling repeatable grinding of cylindrical and conical surfaces to a relatively high degree of precision and quality. With this aim in view, according to the present invention, there is provided a grinding machine comprising a worktable traveling along a first longitudinal axis parallel to the axis of the workpiece; at least one grinding wheel; and a wheel supporting saddle moving to and from said worktable along a second axis usually arranged crosswise in relation to said first axis; characterised by the fact that it also comprises a wheel table supporting said wheel saddle and traveling along a third longitudinal axis adjustable in relation to said first longitudinal axis and about a fourth axis perpendicular to said second and third axes. As described in more detail later on, the grinding machine as described above provides for troublefree, single-pass grinding of workpieces presenting both cylindrical and conical portions. In particular, cylindrical portions may be ground by maintaining the wheel table stationary, parallel to the worktable, and moving the worktable along said first longitudinal axis; whereas conical portions may be ground by positioning said third axis, and consequently said wheel table, parallel to the generating line of the cone facing them, and by moving the wheel table along said third axis while maintaining the worktable stationary.

By virtue of the worktable never, under any circumstances, being rotated, and said first longitudinal axis remaining fixed regardless of the machining operation involved, any inaccuracy arising during return of said third longitudinal axis to its zero position, wherein it is perfectly parallel to said first axis, may always be rectified by truing the grinding wheel.

To enable the use of conical wheels as described above, said second axis on the above machine is preferably adjustable about a fifth axis parallel to said fourth axis.

A non-limiting embodiment of the present invention will be described by way of example with reference to the accompanying drawings, in which:

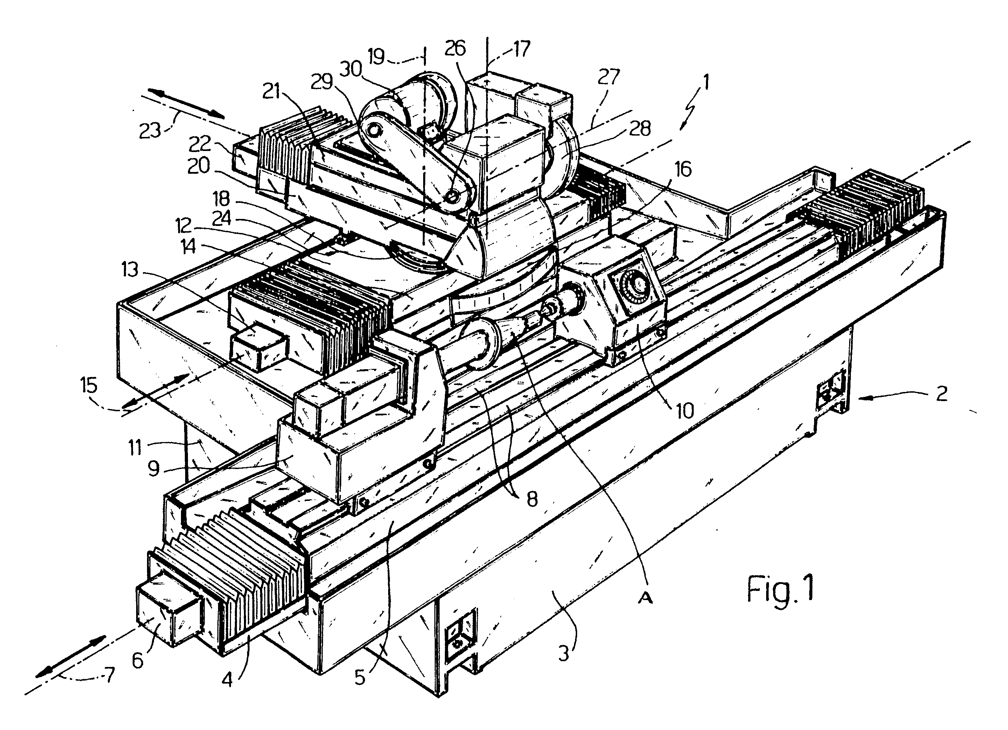

Fig.1 shows a schematic view in perspective of a preferred embodiment of a grinding machine in accordance with the present invention;

Fig.s 2 to 5 show diagrams of various operating modes of the Fig.1 machine.

Number 1 in Fig.1 indicates a grinding machine comprising a bed 2, a front portion 3 of which supports fixed slideways 4 for a worktable 5 connected to a reversible motor 6 so as to travel along slideways 4 in the direction of a first horizontal longitudinal axis 7. Here and hereinafter, the terms "longitudinal" and "transverse" refer to the workpiece. In particular, the term "longitudinal axis" indicates an axis or, generally speaking, a direction generally parallel to the longitudinal axis of the workpiece; whereas the term "transverse axis" indicates an axis or, generally speaking, a direction generally transversal to the longitudinal axis of the workpiece.

Worktable 5 is fitted with top slideways 8 extending in the direction of axis 7 and supporting in sliding manner a powered headstock 9 and a tailstock 10 for supporting and rotating workpiece A about its longitudinal axis parallel to axis 7.

On a portion 11 of bed 2 extending rearwards from an intermediate portion of front portion 3, there is mounted a wheel table 12 connected to a reversible motor 13 so as to travel along slideways 14 in the direction of a second horizontal longitudinal axis 15. Slideways 14 are connected to portion 11 of bed 2 via the interposition of a platform 16 designed to turn, in relation to bed 2, about a vertical axis 17, for positioning axis 15 in relation to axis 7, and inclining axis 15 in relation to axis 7 at any angle usually ranging from 0° to 15°.

Wheel table 12 supports a central plate 18 on which is mounted for rotation, about a second vertical axis 19, a guide device 20 for a wheel saddle 21 connected to a reversible motor 22 so as to travel on guide device 20 in the direction of a horizontal transverse axis 23. Wheel table 12 is fitted with two stops 24, 25 (Fig.5) for generally limiting rotation of axis 23 in relation to axis 15 to 30° as of a "zero" position wherein guide device 20 contacts stop 24 and axis 23 is perfectly perpendicular to axis 15.

Wheel saddle 21 is fitted through with a shaft 26 mounted for rotation about a horizontal axis 27 perpendicular to axis 23. One end of shaft 26 is fitted with a grinding wheel 28, the edge of which projects frontwards of saddle 21 in the direction of worktable 5. The other end of shaft 26 is connected to a drive 29 connecting shaft 26 to a motor 30 powering wheel 28 on saddle 21.

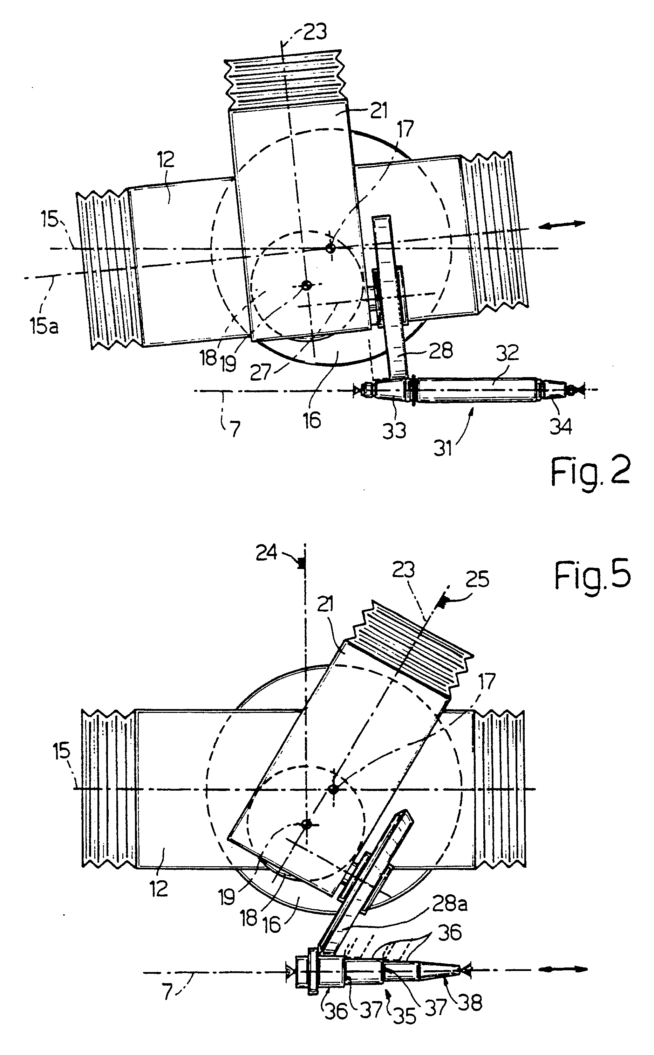

Operation of grinding machine 1 will be described with reference to Fig.s 2 to 4, which show a cylindrical wheel 28 used for grinding a shaft 31 having a cylindrical central portion 32 and two opposed conical end portions 33, 34, and the longitudinal axis of which is illustrated for simplicity as coinciding with axis 7. Shaft 31 is ground in one pass commencing, for example, with conical portion 33. As shown in Fig.2, wheel table 12 is rotated about axis 17 so as to set axis 15, formerly parallel to axis 7, into position 15a, wherein axis 27 is positioned parallel to the generating line of the conical surface of conical portion 33 facing wheel 28. Subsequently, motor 6 is left idle for maintaining shaft 31 in its original position along axis 7, whereas motor 22 is operated for bringing wheel 28 into contact with portion 33, and motor 13 for moving wheel table 12 along axis 15a and so enabling wheel 28 to explore portion 33.

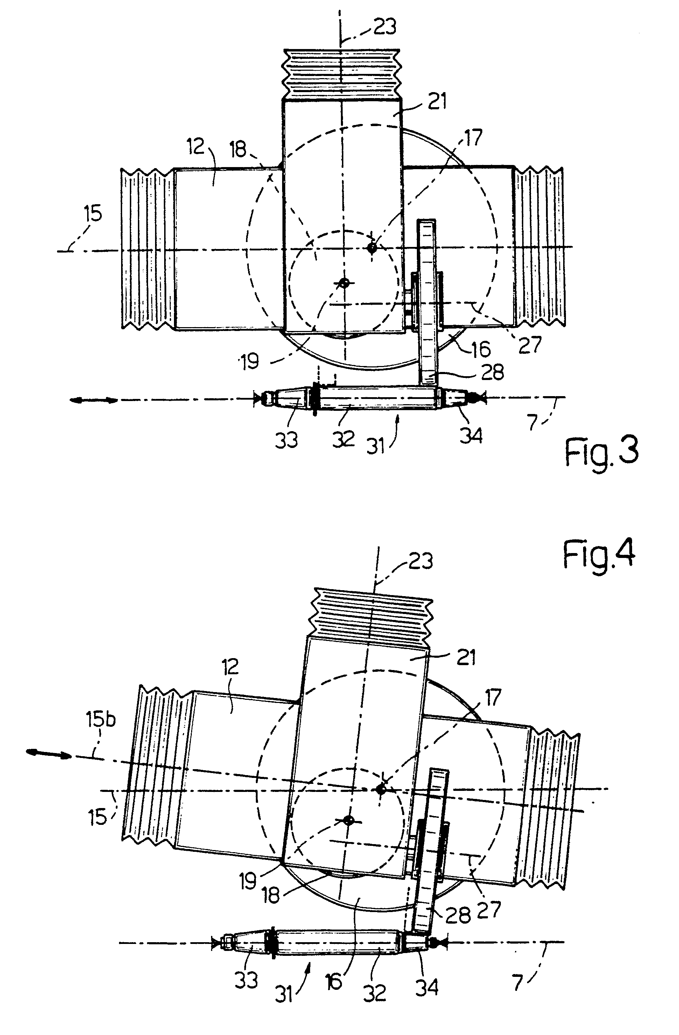

As shows in Fig.3, wheel table 12 is then turned about axis 17 so as to return axis 15 to its original position parallel to axis 7, and, upon wheel 28 contacting portion 32, motor 13 is left idle for maintaining wheel table 12 stationary, whereas worktable 5 is moved along axis 7 via motor 6, so as to enable wheel 28 to explore cylindrical portion 32.

As regards return of axis 15 to its original position, it should be pointed out that, should a high degree of accuracy be required, any inaccuracy may be rectified at any time by truing the grinding wheel. In fact, the truing tool (not shown) is supported on worktable 5 and provides for rendering the working surface of wheel 28 perfectly parallel to fixed axis 7. On known grinding machines with an adjustable axis 7, this would not be possible in that truing of the wheel provides for compensating for any errors in the position of the wheel in relation to a fixed axis, but not for any errors in the annular position of an adjustable axis in relation to the wheel.

Finally (Fig.4), wheel table 12 is turned about axis 17 so as to set axis 15, formerly parallel to axis 7, into position 15b wherein axis 27 is positioned parallel to the generating line of the conical surface of conical portion 34 facing wheel 28. Subsequently, motor 6 is left idle for maintaining shaft 31 stationary along axis 7, whereas motor 13 is operated for moving wheel table 12 along axis 15b and so enabling wheel 28 to explore conical portion 34.

Fig.5 shows a conical wheel 28a used for grinding a shaft 35 having a number of cylindrical portions 36 separated by shoulders 37, and a conical end portion 38. The only difference between this and shaft 31 is that, prior to grinding, saddle 21 is turned about axis 19 so as to bring guide device 20 into contact with stop 25 and set the outer surface of wheel 28a parallel to axis 7. Cylindrical portions 36 and conical portion 38 of shaft 35 are then ground as already described with reference to Fig.s 2 to 4.

According to a variation not shown, saddle 21 supports, in known manner, a second internal grinding wheel connected to saddle 21 by means of a supporting device designed to move between an operating and an idle position. With the support set to the operating position, both cylindrical and conical holes may be ground in the same way as described with reference to wheel 28.

## Claims

1) - A grinding machine (1) comprising a worktable (5) traveling along a first longitudinal axis (7) parallel to the axis of the workpiece (31) (35); at least one grinding wheel (28) (28a); and a wheel supporting saddle (21) moving to and from said worktable (5) along a second axis (23) usually arranged crosswise in relation to said first axis (7); characterised by the fact that it also comprises a wheel table (12) supporting said wheel saddle (21) and traveling along a third longitudinal axis (15) adjustable in relation to said first longitudinal axis (7) and about a fourth axis (17) perpendicular to said second (23) and third (15) axes.

2) - A grinding machine as claimed in Claim 1, characterised by the fact that said second axis (23) is adjustable about a fifth axis (19) parallel to said fourth axis (17).

3) - A grinding machine as claimed in Claim 1 or 2, characterised by the fact that first guide means (14) are provided for supporting said wheel table (12) in sliding manner in the direction of said third axis (15), and that first rotary platform means (16) are provided for supporting said first guide means (14) for rotation about said fourth axis (17).

4) - A grinding machine as claimed in Claim 3, characterised by the fact that second guide means (20) are provided for supporting said wheel saddle (21) in sliding manner in the direction of said second axis (23), and that second rotary platform means (18) are provided for supporting said second guide means (20) for rotation about said fifth axis (19).

5) - A grinding machine as claimed in Claim 4, characterised by the fact that stop means (24, 25) are provided for limiting rotation of said second guide means (20) about said fifth axis (19) to a predetermined angle.

Fig.1

EP 0 406 775 A2

Fig. 2

Fig. 5

Fig.3

Fig.4